# EUROPÄISCHE PATENTSCHRIFT

(11) **EP 3 515 737 B1**
(45) Veröffentlichungstag und Bekanntmachung des Hinweises auf die Patenterteilung: **05.10.2022**
(21) Anmeldenummer: 17768030.3
(22) Anmeldetag: 31.08.2017
(51) Int. Cl.: B60J 10/21

(54) **DICHTUNGSANORDNUNG FÜR EIN KRAFTFAHRZEUGFENSTER, DICHTUNGSVERBUND UND VERFAHREN ZUM HERSTELLEN EINES DICHTUNGSVERBUNDES**
SEAL ARRANGEMENT FOR A VEHICLE WINDOW, A SEAL COMPOSITE AND FABRICATION METHOD FOR A SEAL COMPOSITE
DISPOSITIF D'ÉTANCHÉITÉ POUR UNE VITRE DE VÉHICULE ,COMPOSITE DE JOINT D'ÉTANCHÉITÉ ET PROCÉDÉ DE PRODUCTION D'UNE COMPOSITE DE JOINT D'ÉTANCHÉITÉ

(30) Priorität: 23.09.2016 DE 102016117957
(43) Veröffentlichungstag der Anmeldung: 31.07.2019
(73) Patentinhaber: Cooper Standard GmbH, 88131 Lindau (DE)
(72) Erfinder: KREFTA, Tomasz, 88131 Lindau (DE); HAUPT, Lutz, 88131 Lindau (DE)
(74) Vertreter: Witte, Weller & Partner Patentanwälte mbB
(86) Internationale Anmeldenummer: PCT/EP2017/071842
(87) Internationale Veröffentlichungsnummer: WO 2018/054661

(56) Entgegenhaltungen:
- EP-A2- 2 676 825
- DE-A1- 4 128 845
- GB-A- 2 353 553
- US-A1- 2009 021 044
- US-A1- 2016 214 471

## Beschreibung

Die vorliegende Verbindung betrifft einen Dichtungsverbund, wobei der Dichtungsverbund eine Dichtungsanordnung beinhaltet, wobei die Dichtungsanordnung zur Abdichtung eines Eckbereiches eines Fensters gegen ein Karosseriebauteil eines Kraftfahrzeuges, wobei die Dichtungsanordnung eine Dichtungsebene sowie eine erste Dichtungsachse und eine sich quer hierzu erstreckende zweite Dichtungsachse definiert, mit einem Befestigungsabschnitt zur Befestigung an dem Karosseriebauteil und mit einem Dichtungsabschnitt, der eine Dichtlippe aufweist, die quer zu der Dichtungsebene elastisch auslenkbar ist, wenn der Eckbereich des Fensters in Anlage an die Dichtlippe gelangt, und die sich von der ersten Dichtungsachse bogenförmig hin zu der zweiten Dichtungsachse erstreckt.

Ferner betrifft die vorliegende Erfindung ein Verfahren zum Herstellen eines Dichtungsverbundes zur Abdichtung eines Fensters gegen ein Karosseriebauteil eines Kraftfahrzeuges, wobei der Dichtungsverbund eine Dichtungsebene sowie eine erste Dichtungsachse und eine sich quer hierzu erstreckende zweite Dichtungsachse definiert. Dokument US 2009/021044 wird als nächstliegender Stand der Technik angesehen. Es offenbart den Oberbegriff des Produktanspruchs 1.

Das Dokument US 2016/0214471 A1 offenbart eine u-förmige Dichtung aus elastischem Polymermaterial, die innerhalb eines Fensterrahmens eines Fahrzeugs angebracht ist, wobei die Dichtung zur Abdichtung einer Fensterscheibe innerhalb der Aufwärtsbewegung geeignet ist. Zur dynamischen Abdichtung von Fensterscheiben ist es bekannt, Profildichtungen zu extrudieren. Die extrudierten Profildichtungen können dann entlang von Biegungen verlegt werden. In Eckbereichen ist es möglich, zwei sich entlang unterschiedlicher Dichtungsachsen erstreckende Profildichtungen auf Gehrung zuzuschneiden und aneinander anstoßen zu lassen. Aufgrund von Toleranzen ist das Erscheinungsbild eines derartigen Eckbereiches einer Dichtungsanordnung jedoch nicht immer zufriedenstellend. Ferner ist es bekannt, Profildichtungen der oben beschriebenen Art in einem Eckbereich jeweils etwas abzubiegen, sodass sich die Profildichtungen in der Mitte treffen. Anschließend werden die extrudierten Profildichtungen in eine Spritzgussform eingelegt und es wird an die zwei aneinander anstoßenden Profildichtungen ein Befestigungsabschnitt angespritzt, der folglich als Guss-Befestigungsabschnitt realisiert ist. Hierbei ist es nicht immer einfach, die Enden der Profildichtungen innerhalb der Gussform geeignet zu fixieren. Folglich kann es von Gussvorgang zu Gussvorgang zu Variationen hinsichtlich der relativen Dichtlippenpositionen kommen.

Denkbar ist auch, ein extrudiertes Dichtungsprofil ausschließlich für den Eckbereich vorzusehen. In diesem Fall würde ein solcher extrudierter Profilabschnitt in eine Gussform eingelegt werden, um anschließend daran einen Befestigungsabschnitt anzuspritzen. Bei gebogenen extrudierten Profildichtungen ist jedoch immer die Problematik vorhanden, dass eine quer zu der Dichtungsebene elastisch auslenkbare Dichtungslippe sich aufgrund der Biegung entweder gegenüber einem nicht gebogenen Zustand aufstellt oder gegebenenfalls vorausgelenkt wird. Mit anderen Worten kann sich die Funktion einer Dichtlippe eines solchen extrudierten Profilstranges in einem Bereich, bei dem sich der Profilstrang entlang seiner Längsachse erstreckt, und einem Bereich, bei dem er gebogen ist, unterscheiden. Derartige Änderungen der Dichtlippenposition relativ zu der Dichtungsebene können zu Geräuschproblematiken führen.

Sofern extrudierte Profildichtungen in einem Biegungsbereich aufeinander stoßen sollen, sind die Profildichtungen an ihren aufeinander zuweisenden Enden relativ aufwändig zu beschneiden. Mit anderen Worten erfolgt das Beschneiden gegebenenfalls nicht senkrecht zu einer Längsachse der Profildichtung. Ggf. kann ein Beschnitt leicht schräg zu einer Längsachse der Profildichtung notwendig sein.

Es ist vor diesem Hintergrund eine Aufgabe der Erfindung, einen verbesserten Dichtungsverbund zur Abdichtung eines Eckbereiches eines Fensters sowie ein verbessertes Verfahren zum Herstellen eines Dichtungsverbundes anzugeben.

Die obige Aufgabe wird dadurch gelöst, dass die Dichtlippe der Dichtungsanordnung über ihre gesamte bogenförmige Erstreckung als Guss-Dichtlippe ausgebildet ist.

Ferner wird die obige Aufgabe gelöst durch einen Dichtungsverbund mit einer ersten extrudierten Profildichtung, die sich entlang einer ersten Dichtungsachse erstreckt, mit einer zweiten extrudierten Profildichtung, die sich entlang einer zweiten Dichtungsanordnung erstreckt, und mit einer Dichtungsanordnung zur Abdichtung eines Eckbereiches eines Fensters gegen ein Karosseriebauteil eines Kraftfahrzeuges, wobei die Dichtungsanordnung eine Dichtungsebene sowie eine erste Dichtungsachse und eine sich quer hierzu erstreckende zweite Dichtungsachse definiert, wobei die Dichtungsanordnung einen Befestigungsabschnitt zur Befestigung an dem Karosseriebauteil und einen Dichtungsabschnitt aufweist, der eine Dichtlippe aufweist, die quer zu der Dichtungsebene elastisch auslenkbar ist, wenn der Eckbereich des Fensters in Anlage an die Dichtlippe gelangt, und die sich von der ersten Dichtungsachse bogenförmig hin zu der zweiten Dichtungsachse erstreckt, wobei die Dichtlippe über ihre gesamte bogenförmige Erstreckung als Guss-Dichtlippe ausgebildet ist, die im Bereich von wenigstens einem Bogenende ihrer bogenförmigen Erstreckung mit der ersten extrudierten Profildichtung verbunden ist, wobei die Guss-Dichtlippe aus EPDM hergestellt ist und eine Dichtungsfläche der Guss-Dichtlippe und eine Dichtungsfläche einer Profildichtungslippe der ersten Profildichtung mit einer einheitlichen Beschichtung versehen sind, wobei der Dichtungsabschnitt einen Dichtlippenträger aufweist, der im Wesentlichen parallel zu der Dichtungsebene ausgerichtet ist und sich bogenförmig entlang der Bogenform erstreckt, wobei der Dichtlippenträger mit einer Befestigungsplatte des Befestigungsabschnittes verbunden ist, die sich im Wesentlichen parallel zu der Dichtungsebene erstreckt und im Wesentlichen dreieckförmig zuläuft, sodass Seitenkanten der Befestigungsplatte im Wesentlichen parallel zu den Dichtungsachsen ausgerichtet sind, und wobei die Seitenkanten der Befestigungsplatte in einer Plattenecke münden, an der ein Integrationsabschnitt mit der Befestigungsplatte verbunden ist.

Schließlich wird die obige Aufgabe gelöst durch ein Verfahren zum Herstellen eines Dichtungsverbundes zur Abdichtung eines Fensters gegen ein Karosseriebauteil eines Kraftfahrzeuges, wobei der Dichtungsverbund eine Dichtungsebene sowie eine erste Dichtungsachse und eine sich quer hierzu erstreckende zweite Dichtungsachse definiert, mit den Schritten, (i) eine Dichtungsanordnung zu gießen, wobei die Dichtungsanordnung einen Befestigungsabschnitt zur Befestigung an dem Karosseriebauteil und einen Dichtungsabschnitt mit einer quer zu der Dichtungsebene elastisch auslenkbaren Dichtlippe aufweist, die sich von der ersten Dichtungsachse bogenförmig hin zu der zweiten Dichtungsachse erstreckt, (ii) eine Profildichtung zu extrudieren, die eine Profildichtungslippe aufweist, und (iii) die Dichtungsanordnung und die Profildichtung so zu verbinden, dass die Dichtlippe der Dichtungsanordnung und die Profildichtungslippe der Profildichtung aneinander anschließen.

Bei der erfindungsgemäßen Dichtungsanordnung ist die Dichtlippe über ihre gesamte bogenförmige Erstreckung als Guss-Dichtlippe ausgebildet. Unter einer Guss-Dichtlippe wird eine Dichtlippe verstanden, die im Wege eines diskontinuierlichen Gussverfahrens hergestellt ist. Das verwendete Gussverfahren ist vorzugsweise ein Spritzgießverfahren. Das Gussverfahren kann jedoch auch ein Spritzpressverfahren sein, beispielsweise ein Kompressions-Transfer Molding-Verfahren. Auch ein Pressverfahren im Sinne eines Kompressions-Gussverfahrens (Formpressen) soll vorliegend unter den Begriff Gussverfahren fallen.

Durch die Maßnahme, die Dichtlippe über ihre gesamte bogenförmige Erstreckung als Guss-Teil auszubilden, kann die Dichtlippe über die gesamte bogenförmige Erstreckung eine definierte Position haben. Ferner ergeben sich in dem Bogenbereich keine Schnittstellen, die aufwändig zuzuschneiden oder sonst wie zu bearbeiten sind, und die zu ästhetischen Problemen hinsichtlich der entstehenden Stöße bzw. Nahtstellen führen können.

Insgesamt ergeben sich so ein besseres Geräuschverhalten und auch ein verbessertes Erscheinungsbild.

Weiterhin ist vorteilhaft, dass die sich an die Guss-Dichtlippe anschließenden Dichtungen, die beispielsweise als extrudierte Profildichtungen ausgebildet sein können, nicht notwendigerweise das gleiche Profil haben müssen. Mit anderen Worten kann beispielsweise eine horizontale extrudierte Profildichtung mit einem anderen Profil ausgestattet sein als eine vertikale extrudierte Profildichtung. In diesem Fall ist die Dichtlippe, oder der Dichtungsabschnitt insgesamt, im Bereich der Bogenenden mit unterschiedlichen Profilen ausgestattet, die zum direkten Anschluss an die jeweiligen unterschiedlichen Profildichtungen ausgebildet sind.

Folglich ergibt sich eine höhere Variabilität hinsichtlich der mit der Dichtungsanordnung herzustellenden Dichtungsverbundanordnungen.

Erfindungsgemäß ist die gesamte Dichtungsabschnitt über die gesamte bogenförmige Erstreckung als Guss-Dichtungsabschnitt ausgebildet. Bevorzugt ist es, wenn der Dichtungsabschnitt und der Befestigungsabschnitt beide im Gussverfahren hergestellt sind, sodass die Dichtungsanordnung insgesamt als Guss-Dichtungsanordnung ausgebildet ist.

Bei dem Dichtungsverbund kann sich zwischen der ersten extrudierten Profildichtung und der zweiten extrudierten Profildichtung vorzugsweise genau eine Dichtungsanordnung der erfindungsgemäßen Art erstrecken. Generell ist es auch denkbar, dass über die bogenförmige Erstreckung zwischen der ersten extrudierten Profildichtung und der zweiten extrudierten Profildichtung zwei oder mehr Dichtungsanordnungen der erfindungsgemäßen Art in Bogenrichtung aneinander anschließend angeordnet sind.

Die erste und die zweite Dichtungsachse sind vorzugsweise unter einem Winkel größer 45° zueinander angeordnet, insbesondere unter einem Winkel größer 60°, insbesondere unter einem Winkel größer 70°. Die Dichtungsebene verläuft vorzugsweise parallel zu einer Ebene oder ist durch eine Ebene gebildet, die durch die erste Dichtungsachse und die zweite Dichtungsachse aufgespannt wird.

Die Dichtungsanordnung ist insbesondere zur Installation in einem Türrahmen benachbart zur B-Säule ausgelegt. Insgesamt ist es bevorzugt, wenn die erfindungsgemäße Dichtungsanordnung zur Abdichtung eines Eckbereiches eines beweglichen Fensters einer Tür oder einer Klappe eines Kraftfahrzeuges ausgebildet ist.

Die Aufgabe wird somit vollkommen gelöst.

Gemäß einer bevorzugten Ausführungsform ist die Guss-Dichtlippe einstückig ausgebildet, ist also vorzugsweise aus einem einheitlichen Material in einem einstufigen Gussverfahren hergestellt.

Gemäß einer weiteren bevorzugten Ausführungsform erstreckt sich die Guss-Dichtlippe kragenartig gegenüber einem Dichtlippenträger des Dichtungsabschnittes.

Die Guss-Dichtlippe erstreckt sich dabei vorzugsweise unter einem Winkel in einem Bereich von 20° bis 60°, insbesondere in einem Bereich vom 30° bis 50° in Bezug auf den Dichtlippenträger, der vorzugsweise plattenartig ausgebildet sein kann und der vorzugsweise etwa parallel zu der Dichtungsebene ausgerichtet ist.

Bei Anlage des Eckbereiches des Fensters an der Guss-Dichtlippe kann die sich gegenüber dem Dichtlippenträger kragenartig erstreckende Guss-Dichtlippe ausgelenkt werden, und zwar in Richtung hin zu dem Dichtlippenträger, bis sie nahezu parallel zu diesem angeordnet ist, wenn das Fenster gegen das Karosseriebauteil vollständig abgedichtet ist, das Fenster also beispielsweise geschlossen ist.

Die Guss-Dichtlippe ist erfindungsgemäß aus EPDM hergestellt, also einem Ethylen-Propylen-Dien-Kautschuk.

Bevorzugt ist es, wenn die Dichtungsanordnung einstückig aus EPDM hergestellt ist, oder aus einem TPE-Material. Generell ist es auch denkbar, dass die Dichtungsanordnung als Hybrid-Dichtungsanordnung ausgebildet ist, wobei bestimmte Abschnitte beispielsweise aus EPDM hergestellt sind und andere aus TPE, oder aus unterschiedlichen TPE-Verbindungen oder aus unterschiedlichen EPDM-Verbindungen.

Erfindungsgemäß weist die Guss-Dichtungslippe eine Dichtungsfläche auf, wobei die Dichtungsfläche eine Beschichtung aufweist, insbesondere bevorzugt ist eine Beflockung.

Hierdurch kann das Oberflächen-Erscheinungsbild der Dichtung verbessert werden. Gegebenenfalls kann auch das Geräuschverhalten verbessert werden, da durch die Beschichtung, insbesondere durch die Beflockung, ein verbessertes Gleitverhalten zwischen der Dichtlippe und dem Fenster realisierbar ist.

Erfindungsgemäß ist die Guss-Dichtungslippe im Bereich von wenigstens einem Bogenende ihrer bogenförmigen Erstreckung mit einer extrudierten Profildichtung verbunden, wobei eine Dichtungsfläche der Guss-Dichtlippe und eine Dichtungsfläche einer Profildichtungslippe der Profildichtung mit einer einheitlichen Beschichtung versehen sind.

Hierbei kann die Beschichtung, insbesondere die Beflockung, sich einheitlich über die Profildichtungslippe und, über den Verbindungsspalt hinweg, über die Dichtlippe der Dichtungsanordnung erstrecken.

Insbesondere kann der Beschichtungsvorgang erfolgen, nachdem die extrudierte Profildichtung und die Dichtungsanordnung miteinander verbunden worden sind. In manchen Fällen kann die extrudierte Profildichtung auch im Spritzgussverfahren beim Herstellen der Dichtungsanordnung im Wege eines Gussverfahren mit angespritzt werden, sodass der Dichtungsverbund anschließend einstückig ist und auf einfache Weise mit einer einheitlichen Beschichtung versehen werden kann.

Insgesamt ist es ferner vorteilhaft, wenn die Guss-Dichtlippe an wenigstens einem ersten Bogenende ihrer bogenförmigen Erstreckung ein Dichtungsprofil aufweist, das eine Profillängsachse definiert, wobei das erste Bogenende sich unter einem rechten Winkel zu der Profillängsachse erstreckt.

Auf diese Weise kann an das erste Bogenende eine extrudierte Profildichtung angesetzt werden, die auf einfache Weise senkrecht zu ihrer Längsachse beschnitten ist. Durch die Ausbildung des ersten Bogenendes unter einem rechten Winkel zu der Profillängsachse kann auch bei einem senkrechten Beschnitt der extrudierten Profildichtung eine exzellente Verbindung beziehungsweise Naht realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht eines Kraftfahrzeuges;
- Fig. 2: eine schematische Draufsicht auf eine Ausführungsform einer erfindungsgemäßen Dichtungsanordnung;
- Fig. 3: eine erste perspektivische Ansicht der Dichtungsanordnung der Fig. 2;
- Fig. 4: eine zweite perspektivische Ansicht der Dichtungsanordnung der Fig. 2; und
- Fig. 5: eine Darstellung eines Dichtungsprofils der Dichtungsanordnung der Fig. 2-4.

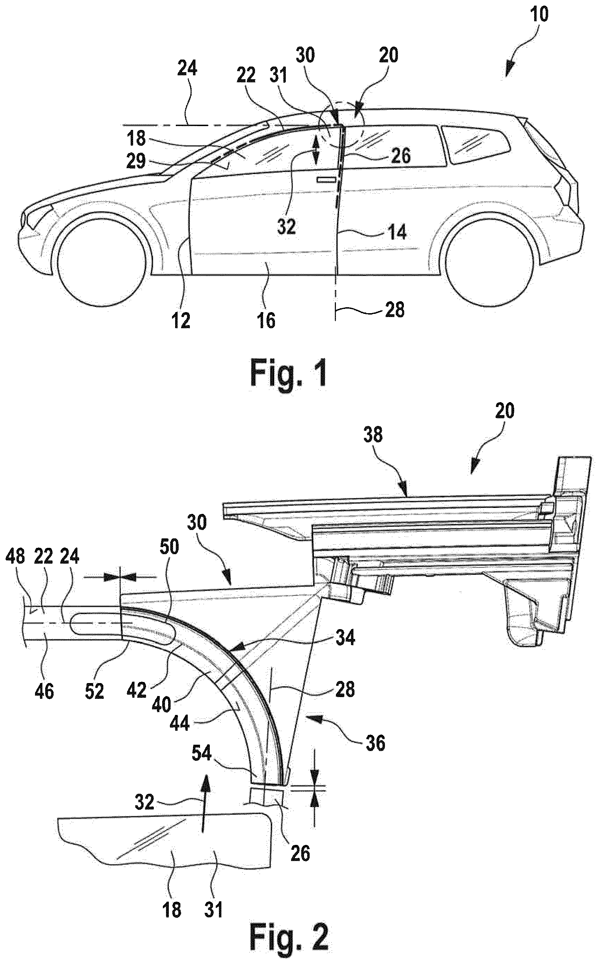

In Fig. 1 ist in schematischer Form ein Kraftfahrzeug dargestellt und generell mit 10 bezeichnet.

Das Kraftfahrzeug 10 weist eine A-Säule 12 und eine B-Säule 14 auf. Zwischen der A-Säule 12 und der B-Säule 14 ist eine Vordertür 16 mit einem beweglichen Vordertürfenster 18 schwenkbar gelagert.

Zur Abdichtung des Vordertürfensters 18 gegen die Vordertür 16 ist ein Dichtungsverbund 20 vorgesehen. Dieser Verbund 20 beinhaltet eine erste extrudierte Profildichtung 22, die im Wesentlichen horizontal entlang einer ersten Dichtungsachse 24 angeordnet und ausgerichtet ist. Die erste extrudierte Profildichtung 22 dient zum Abdichten einer oberen Seitenkante des Vordertürfensters 18. Ferner beinhaltet der Dichtungsverbund 20 eine zweite extrudierte Profildichtung 26, die im Wesentlichen vertikal entlang einer zweiten Dichtungsachse 28 angeordnet und ausgerichtet ist. Die zweite Dichtungsachse 28 ist unter einem Winkel größer 45° insbesondere größer 60°, insbesondere größer 70° im Bezug auf die erste Dichtungsachse 24 ausgerichtet. Die zweite extrudierte Profildichtung 26 dient im Wesentlichen zur Abdichtung einer Seitenkante des Vordertürfensters 18, und zwar im Bereich der B-Säule 14.

Die erste Dichtungsachse 24 und die zweite Dichtungsachse 28 spannen eine Dichtungsebene 29 auf, die vorzugsweise im Wesentlichen parallel mit einer Ebene des Vordertürfensters 18 ausgerichtet ist.

Der Dichtungsverbund 20 weist ferner eine Dichtungsanordnung 30 zur Abdichtung eines Eckbereiches 31 des Vordertürfensters 18 im Bereich der B-Säule 14 gegen die Vordertür 16 auf.

Die Dichtungsanordnung 30 erstreckt sich bogenförmig von der ersten extrudierten Profildichtung 22 und deren erster Dichtungsachse 24 in Richtung hin zu der zweiten extrudierten Profildichtung 26 und hin zu der zweiten Dichtungsachse 28. Die Dichtungsanordnung 30 ist über ihre gesamte bogenförmige Erstreckung als Guss-Dichtlippe ausgebildet, ist also durch ein diskontinuierliches Guss- oder Formverfahren hergestellt und ist insbesondere nicht durch Extrusion hergestellt. Insbesondere eine Dichtlippe, die in Anlage an das Vordertürfenster 18 gelangt, ist dabei als Guss-Dichtlippe ausgebildet und erstreckt sich bogenförmig.

In Fig. 1 ist ferner eine Fensterbewegungsrichtung 32 schematisch angedeutet. Die Fensterbewegungsrichtung 32 ist im Wesentlichen parallel zu der zweiten Dichtungsachse 28 ausgerichtet.

Vorliegend ist die Dichtungsanordnung 30 im Bereich einer B-Säule 14 des Kraftfahrzeuges 10 angeordnet, und zwar im Bereich des Vordertürfensters 18. Eine Dichtungsanordnung 30 der oben beschriebenen Art kann jedoch auch im Bereich eines Hintertürfensters oder im Bereich eines Heckklappenfensters oder dergleichen angeordnet sein, wobei das Fenster insbesondere ein bewegliches Fenster ist. Die Dichtungsanordnung 30 ist dabei insbesondere zur Anordnung in einem Eckbereich angeordnet, wie es in Fig. 1 durch gestrichelte Kreise im Bereich des nicht näher bezeichneten Hintertürfensters angedeutet ist.

In Fig. 2 ist eine Ausführungsform eines Dichtungsverbundes 20 dargestellt, der in das Kraftfahrzeug der Fig. 1 einbaubar ist. Der Dichtungsverbund 20 entspricht hinsichtlich Aufbau und Funktionsweise dem Dichtungsverbund 20 der Fig. 1. Gleiche Elemente sind durch gleiche Bezugszeichen angegeben.

Es ist zu erkennen, dass die Dichtungsanordnung 30 des Dichtungsverbundes 20 einen Dichtungsabschnitt 34 und einen Befestigungsabschnitt 36 aufweist. Ferner kann, wie in Fig. 2 dargestellt, die Dichtungsanordnung 30 zusätzlich einen Integrationsabschnitt 38 beinhalten, der mit dem Befestigungsabschnitt 36 verbunden ist und der vorzugsweise in einen Rahmen der Vordertür 16 so integrierbar ist, dass ein Teil hiervon als Dichtung gegen einen Türrahmen dienen kann.

Der Dichtungsabschnitt 34 der Dichtungsanordnung 30 weist eine Dichtlippe 40 auf, die sich bogenförmig erstreckt, wie es bei 42 gezeigt ist. Die Dichtlippe 40 stellt eine bogenförmige Dichtungsfläche 44 bereit. Die Dichtlippe 40 erstreckt sich vorzugsweise kragenförmig gegenüber einem in Fig. 2 nicht näher bezeichneten Dichtlippenträger des Dichtungsabschnittes 34 und ist in einer Richtung quer zu der Dichtungsebene 29 auslenkbar, wenn der Eckbereich 31 des Vordertürfensters 18 in Anlage an die Dichtlippe 40, insbesondere in Anlage an deren Dichtungsfläche 44 gelangt.

In Fig. 2 ist ferner dargestellt, dass die erste Profildichtung 22, die entlang der ersten Dichtungsachse 24 ausgerichtet ist, ebenfalls eine Profildichtungslippe 46 aufweist, die in Form und Funktion der Dichtlippe 40 entspricht. In gleicher Weise kann auch die zweite Profildichtung 26 eine derartige Profildichtungslippe beinhalten, auch wenn dies in Fig. 2 nicht näher dargestellt ist.

Die Profildichtungslippe 46 weist eine Dichtungsfläche 48 auf, die gemeinsam mit der Dichtungsfläche 44 der Dichtlippe 40 eine einheitliche Dichtungsfläche bildet. Folglich ist es möglich, die Dichtungsflächen 44, 48 mit einer gemeinsamen bzw. einheitlichen und sich über eine Schnittstelle zwischen Profildichtung 22 und Dichtungsanordnung 30 erstreckenden Beschichtung 50 zu versehen, die insbesondere als Beflockung ausgebildet sein kann.

Die erste Profildichtung 22 ist angrenzend zu einem ersten Bogenende 52 der Dichtungsanordnung 30 angeordnet. Die zweite Profildichtung 26 ist benachbart und sich unmittelbar anschließend an ein zweites Bogenende 54 der Dichtungsanordnung 30 angeordnet. Die Bogenform 42 der Dichtungsanordnung 30 bzw. der Dichtlippe 40 ist so gewählt, dass die Profildichtungen 22, 26 vorzugsweise senkrecht zu ihrer Profildichtungsachse 24 bzw. 28 beschnitten bzw. abgetrennt sein können, was das Ablängen der Profildichtungen 22, 26 erheblich vereinfacht.

Die Profildichtungen 22, 26 sind vorzugsweise durch ein Extrusionsverfahren hergestellt und werden dann zum Einbau auf Länge geschnitten. Die Dichtungsanordnung 30 ist hingegen vorzugsweise in einem Gussschritt als Guss-Dichtungsanordnung 30 ausgebildet, also durch ein diskontinuierliches Verfahren hergestellt.

Das Material der Profildichtungen 22, 26 und/oder das Material der Dichtungsanordnung 30 ist vorzugsweise EPDM, kann jedoch auch ein thermoplastisches Elastomer (TPE) enthalten.

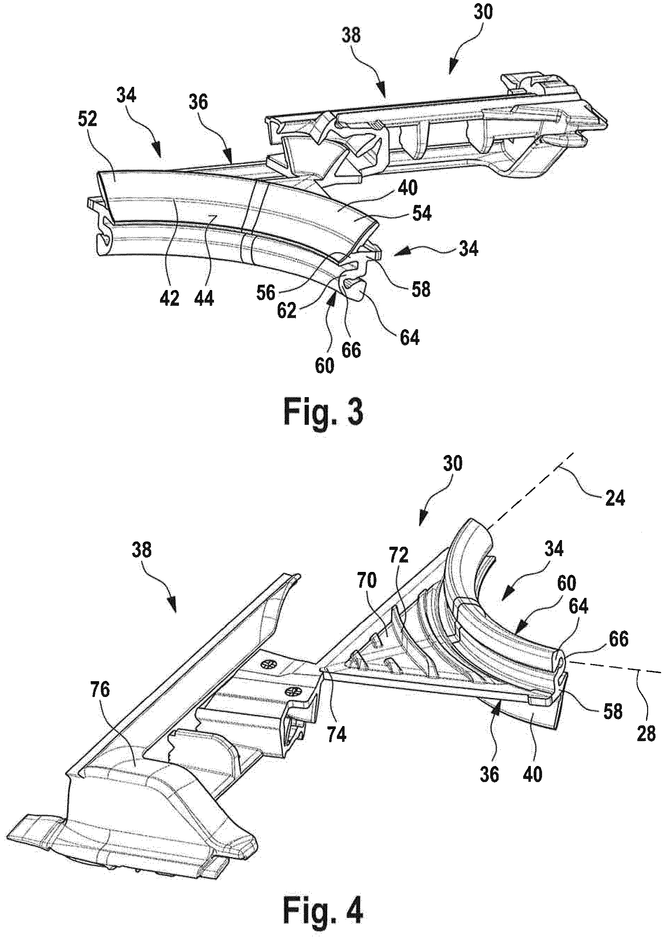

In den Fig. 3 und 4 ist die Dichtungsanordnung 30 der Fig. 2 jeweils perspektivisch von oben bzw. von unten dargestellt.

Es ist zu erkennen, dass der Dichtungsabschnitt 34 der Dichtungsanordnung 30 ein Dichtungsprofil 56 beinhaltet. Das Dichtungsprofil 56 weist einen Dichtlippenträger 58 auf, der im Wesentlichen parallel zu der Dichtungsebene 29 ausgerichtet ist und sich bogenförmig entlang der Bogenform 42 erstreckt. Die Dichtlippe 40 ist quer hierzu unter einem Winkel in Bezug auf den Dichtlippenträger 58 ausgerichtet und erstreckt sich folglich kragenartig gegenüber dem Dichtlippenträger 58.

Der Befestigungsabschnitt 36 weist einen auf einer der Dichtlippe 40 gegenüberliegenden Seite des Dichtlippenträgers 58 angeordneten Befestigungsbogen 60 auf. Der Befestigungsbogen 60 bildet einen bogenförmigen Schlitz, in dem ein Trägerabschnitt der Vordertür 16 aufnehmbar ist, um die Position des Dichtlippenträgers 58 in Bezug auf die Dichtungsebene 29 zu fixieren. Zu diesem Zweck weist der Befestigungsbogen 60 einen ersten Befestigungssteg und einen zweiten Befestigungssteg 64 auf, die durch einen Verbindungssteg 66 verbunden sind. Die Stege 62, 64, 66 sind jeweils ebenfalls bogenförmig ausgebildet.

Wie es in Fig. 4 zu erkennen ist, ist der Dichtlippenträger 48 mit einer Befestigungsplatte 70 des Befestigungsabschnittes 36 verbunden. Die Befestigungsplatte 70 ist vorzugsweise einstückig mit dem Dichtlippenträger 58 verbunden und ist aus dem gleichen Material wie der Dichtungsabschnitt 34 hergestellt. Die Befestigungsplatte 70 erstreckt sich im Wesentlichen parallel zu der Dichtungsebene 29 und läuft im Wesentlichen dreieckförmig zu, sodass Seitenkanten der Befestigungsplatte 70 im Wesentlichen parallel zu den Dichtungsachsen 24 bzw. 28 ausgerichtet sind.

An einer Rückseite der Befestigungsplatte 70, die der Dichtlippe 40 abgewandt ist, können Rippen 72 ausgebildet sein, die ebenfalls bogenförmig verlaufen können und zur Stabilisierung der Befestigung der Dichtungsanordnung 30 in einem Karosseriebauteil wie der Vordertür 16 dienen können. Insbesondere können die Rippen 72 dazu ausgebildet sein, Kräften auf die Dichtungsanordnung 30 entlang der Dichtungsachsen 24 oder 28 entgegenzuwirken, die auftreten können, wenn der Eckbereich 31 des Fensters 18 in Anlage an die Dichtlippe 40 gelangt.

Die nicht näher bezeichneten Seitenkanten der Befestigungsplatte 70 münden in einer Plattenecke 74, an der der Integrationsabschnitt 38 mit der Befestigungsplatte 70 verbunden ist. Der Integrationsabschnitt 38 ist vorzugsweise einstückig mit dem Befestigungsabschnitt 36 ausgebildet und folglich aus dem gleichen Material hergestellt, insbesondere aus EPDM. An einer Rückseite des Integrationsabschnittes 38 kann ein Türrahmendichtungsabschnitt 76 ausgebildet sein, mittels dessen die Vordertür 16 gegen einen Türrahmenabschnitt der Fahrzeugkarosserie abdichtbar ist.

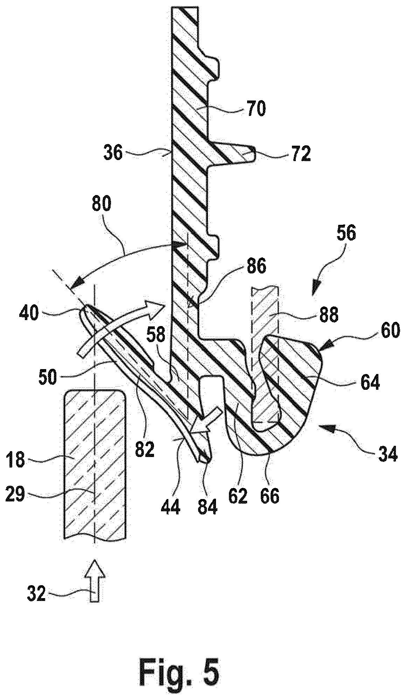

Fig. 5 zeigt eine Schnittansicht des Befestigungsabschnittes 36 und des Dichtungsabschnittes 34 und zeigt insbesondere das Dichtungsprofil 56.

Zum einen ist zu erkennen, dass die Dichtlippe 40 generell unter einem Dichtlippenwinkel 80 gegenüber einer Ebene des Dichtlippenträgers 58 und/oder in Bezug auf die Dichtungsebene 29 ausgerichtet ist. Der Dichtlippenwinkel 80 kann beispielsweise in einem Bereich von 20° bis 60° liegen. Ferner ist zu erkennen, dass die Dichtlippe 40 einen ersten Dichtlippenabschnitt 82 aufweist, der sich unter dem Dichtlippenwinkel 80 gegenüber dem Dichtlippenträger 58 erstreckt, und zwar hin zu einer dem Befestigungsbogen 60 abgewandten Seite des Dichtlippenträgers 58. Ferner beinhaltet die Dichtlippe 40 einen zweiten Dichtlippenabschnitt 84, der sich gegenüber dem Dichtlippenträger 58 in die entgegengesetzte Richtung erstreckt. Die Dichtlippenabschnitte 82, 84 bilden eine gemeinsame Dichtungsfläche 44, die mit einer Beschichtung 50 versehen sein kann, wie es in Fig. 5 schematisch angedeutet ist.

In Fig. 5 ist bei 86 ferner eine Trägerebene des Dichtlippenträgers 58 gezeigt, die vorzugsweise parallel zu der Dichtungsebene 29 ausgerichtet ist.

Auf der dem ersten Dichtlippenabschnitt 82 gegenüberliegenden Seite des Dichtlippenträgers 58 ist der Bogenabschnitt 60 ausgebildet. Der erste Befestigungssteg 62 verläuft dabei im Wesentlichen parallel zu dem zweiten Dichtlippenabschnitt 84 und folglich im Wesentlichen parallel zu der Trägerebene 86. Der zweite Befestigungssteg 64 verläuft parallel hierzu. Die Befestigungsstege 62, 64 sind über den Verbindungssteg 66 miteinander verbunden, der unterhalb des zweiten Dichtlippenabschnittes 84 angeordnet ist.

Bei 88 ist ein Trägerabschnitt eines Karosseriebauteils wie einer Vordertür 16 gezeigt, der in die bogenförmige Vertiefung greift, die durch den Befestigungsbogen 60 gebildet ist.

Fig. 5 zeigt ferner das Fenster 18 und dessen Bewegungsrichtung 32. Es ist zu erkennen, dass dann, wenn das Fenster 18 den ersten Dichtlippenabschnitt 82 berührt, dieser in Richtung hin zu der Trägerebene 86 ausgelenkt wird. Dies führt vorzugsweise dazu, dass der zweite Dichtlippenabschnitt 84 in entsprechender Weise gegenläufig verschwenkt wird und vorzugweise ebenfalls zur Anlage an das Fenster 18 gedrückt wird.

## Patentansprüche

1. Dichtungsverbund (20) mit einer ersten extrudierten Profildichtung (22), die sich entlang einer ersten Dichtungsachse (24) erstreckt, mit einer zweiten extrudierten Profildichtung (26), die sich entlang einer zweiten Dichtungsachse (28) erstreckt, und mit einer Dichtungsanordnung (30) zur Abdichtung eines Eckbereiches (31) eines Fensters (18) gegen ein Karosseriebauteil (16) eines Kraftfahrzeuges (10), wobei die Dichtungsanordnung (30) eine Dichtungsebene (29) sowie eine erste Dichtungsachse (24) und eine sich quer hierzu erstreckende zweite Dichtungsachse (28) definiert, wobei die Dichtungsanordnung (30) einen Befestigungsabschnitt (36) zur Befestigung an dem Karosseriebauteil (16) und einen Dichtungsabschnitt (34) aufweist, der eine Dichtlippe (40) aufweist, die quer zu der Dichtungsebene (29) elastisch auslenkbar ist, wenn der Eckbereich (31) des Fensters (18) in Anlage an die Dichtlippe (40) gelangt, und die sich von der ersten Dichtungsachse (24) bogenförmig hin zu der zweiten Dichtungsachse (28) erstreckt,
wobei die Dichtlippe (40) über ihre gesamte bogenförmige Erstreckung als Guss-Dichtlippe (40) ausgebildet ist, die im Bereich von wenigstens einem Bogenende (52) ihrer bogenförmigen Erstreckung mit der ersten extrudierten Profildichtung (22) verbunden ist,
wobei die Guss-Dichtlippe (40) aus EPDM hergestellt ist und eine Dichtungsfläche (44) der Guss-Dichtlippe (40) und eine Dichtungsfläche (48) einer Profildichtungslippe (46) der ersten Profildichtung (22) mit einer einheitlichen Beschichtung (50) versehen sind,
wobei der Dichtungsabschnitt (34) einen Dichtlippenträger (58) aufweist, der im Wesentlichen parallel zu der Dichtungsebene (29) ausgerichtet ist und sich bogenförmig entlang der Bogenform (42) erstreckt, wobei der Dichtlippenträger (48) mit einer Befestigungsplatte (70) des Befestigungsabschnittes (36) verbunden ist, die sich im Wesentlichen parallel zu der Dichtungsebene (29) erstreckt und im Wesentlichen dreieckförmig zuläuft, sodass Seitenkanten der Befestigungsplatte (70) im Wesentlichen parallel zu den Dichtungsachsen (24) bzw. (28) ausgerichtet sind, **gekennzeichnet dadurch, dass**
die Seitenkanten der Befestigungsplatte (70) in einer Plattenecke (74) münden, an der ein Integrationsabschnitt (38) mit der Befestigungsplatte (70) verbunden ist.

2. Dichtungsverbund nach Anspruch 1, **dadurch gekennzeichnet, dass** die Guss-Dichtungslippe (40) einstückig ausgebildet ist.

3. Dichtungsverbund nach Anspruch 1 oder 2, **dadurch gekennzeichnet, dass** die Guss-Dichtungslippe (40) sich kragenartig gegenüber dem Dichtlippenträger (58) des Dichtungsabschnittes (34) erstreckt.

4. Dichtungsverbund nach einem der Ansprüche 1 - 3, **dadurch gekennzeichnet, dass** die Guss-Dichtlippe (40) an wenigstens einem ersten Bogenende (52) ihrer bogenförmigen Erstreckung ein Dichtungsprofil (56) aufweist, das eine Profillängsachse (24) definiert, wobei das erste Bogenende (52) sich unter einem rechten Winkel zu der Profillängsachse (24) erstreckt.

5. Dichtungsverbund nach Anspruch 1, wobei an einer Rückseite des Integrationsabschnittes (38) ein Türrahmendichtungsabschnitt (76) ausgebildet ist, wobei mittels des Türrahmendichtungsabschnitts eine Vordertür gegen einen Türrahmenabschnitt der Fahrzeugkarosserie abgedichtet wird.

6. Verfahren zum Herstellen eines Dichtungsverbundes (20) zur Abdichtung eines Fensters (18) gegen ein Karosseriebauteil (16) eines Kraftfahrzeuges (10), wobei der Dichtungsverbund (20) eine Dichtungsebene (29) sowie eine erste Dichtungsachse (24) und eine sich quer hierzu erstreckende zweite Dichtungsachse (28) definiert, mit den Schritten:
- Gießen einer Dichtungsanordnung eines Dichtungsverbundes nach einem der Ansprüche 1 - 5, wobei die Dichtungsanordnung (30) aus EPDM hergestellt wird und einen Befestigungsabschnitt (36) zur Befestigung an dem Karosseriebauteil (16) und einen Dichtungsabschnitt (34) mit einer quer zu der Dichtungsebene (29) elastisch auslenkbaren Dichtlippe (40) aufweist, die sich von der ersten Dichtungsachse (24) bogenförmig hin zu der zweiten Dichtungsachse (28) erstreckt,
- Extrudieren einer ersten Profildichtung (22) des Dichtungsverbundes, die eine Profildichtungslippe (46) aufweist, und
- Verbinden der Dichtungsanordnung (30) und der Profildichtung (46), so dass die Dichtungslippe (40) und die Profildichtungslippe (46) an einem Verbindungsspalt aneinander anschließen; und
- Beschichten der Dichtungslippe (40) über den Verbindungsspalt hinweg.

## Claims

1. Sealing composite (20) including a first extruded profile sealing (22) which extends along a first sealing axis (24), a second extruded profile sealing (26) which extends along a second sealing axis (28), and a sealing arrangement for sealing a corner region (31) of a window (18) against a body member (16) of a motor vehicle (10), wherein the sealing arrangement (30) defines a sealing plane (29) as well as a first sealing axis (24) and a second sealing axis (28) which extends transversely to the first sealing axis (24), wherein the sealing arrangement (30) includes a fastening portion (36) for fastening to the body member (16), and a sealing portion (34) which includes a sealing lip (40) which can be deflected elastically in a direction transversely to the sealing plane (29) when the corner region (31) of the window (18) comes into contact with the sealing lip (40), and which extends in an arcuate shape from the first sealing axis (24) to the second sealing axis (28),
wherein the sealing lip (40) is formed over its entire arcuately shaped extension as a molded sealing lip (40) which, in the area of at least one arc end (52) of its arcuately shaped extension, is connected to the first extruded profile sealing (22),
wherein the molded sealing lip (40) is made of EPDM and wherein a sealing surface (44) of the molded sealing lip (40) and a sealing surface (48) of a profile sealing lip (46) of the first profile sealing (22) are provided with a uniform coating (50),
wherein the sealing portion (34) comprises a sealing lip carrier (58) which is aligned essentially parallel to the sealing plane (29) and which extends arcuately along the arcuate shape (42), wherein the sealing lip carrier (58) is connected to a fastening plate (70) of the fastening portion (36), which extends essentially parallel to the sealing plane (29) and which tapers essentially in the shape of a triangle, such that side edges of the fastening plate (70) are aligned essentially parallel to the sealing axes (24) and (28), respectively,
**characterized in that**
the side edges of the fastening plate (70) taper into a plate edge (74), at which an integration portion (38) is connected to the fastening plate (70).

2. Sealing composite according to claim 1, **characterized in that** the molded sealing lip (40) is formed in one piece.

3. Sealing composite according to claim 1 or 2, **characterized in that** the molded sealing lip (40) extends like a collar from the sealing lip carrier (58) of the sealing portion (34).

4. Sealing composite according to one of claims 1-3, **characterized in that** the molded sealing lip (40), at at least a first arc end (52) of its arcuately shaped extension, comprises a sealing profile (56), which sealing profile (56) defines a profile longitudinal axis (24), wherein the first arc end (52) extends at a right angle with respect to the profile longitudinal axis (24).

5. Sealing composite according to claim 1, wherein a doorframe sealing portion (76) is formed at a back side of the integration portion (38), wherein a front door is sealed against a door frame portion of the vehicle body by means of the door frame sealing portion.

6. Method for manufacturing a sealing composite (20) for sealing a window (18) against a body member (16) of a motor vehicle (10), wherein the sealing composite (20) defines a sealing plane (29) as well as a first sealing axis (24) and a second sealing axis (28) extending transversely to the first sealing axis (24), comprising the steps of:
- molding a sealing arrangement of a sealing composite according to one of claims 1-5, wherein the sealing arrangement (30) is made of EPDM and comprises a fastening portion (36) for fastening to the body member (16), and a sealing portion (34) which includes a sealing lip (40) that can be deflected elastically in a direction transverse to the sealing plane (29), wherein the sealing lip (40) extends from the first sealing axis (24) in the shape of an arc to the second sealing axis (28),
- extruding a first profile sealing (22) of the sealing composite, which includes a profile sealing lip (46), and
- connecting the sealing arrangement (30) and the profile sealing (46) so that the sealing lip (40) and the profile sealing lip (46) are contiguous to each other via a connection gap; and
- coating the sealing lip (40) across the connection gap.

## Revendications

1. Composite de joint d'étanchéité (20) comprenant un premier joint d'étanchéité profilé extrudé (22), qui s'étend le long d'un premier axe d'étanchéité (24), comprenant un deuxième joint d'étanchéité profilé extrudé (26), qui s'étend le long d'un deuxième axe d'étanchéité (28), et comprenant un dispositif d'étanchéité (30) pour étanchéifier une zone de coin (31) d'une fenêtre (18) contre un composant de carrosserie (16) d'un véhicule automobile (10), le dispositif d'étanchéité (30) définissant un plan d'étanchéité (29) ainsi qu'un premier axe d'étanchéité (24) et un deuxième axe d'étanchéité (28) s'étendant transversalement à celui-ci, le dispositif d'étanchéité (30) présentant une section de fixation (36) pour la fixation au composant de carrosserie (16) et une section d'étanchéité (34) qui présente une lèvre d'étanchéité (40) qui peut être déviée de manière élastique transversalement au plan d'étanchéité (29) lorsque la zone de coin (31) de la fenêtre (18) vient en application contre la lèvre d'étanchéité (40) et qui s'étend en forme d'arc depuis le premier axe d'étanchéité (24) vers le deuxième axe d'étanchéité (28),
la lèvre d'étanchéité (40) étant configurée sur toute son étendue en forme d'arc sous la forme d'une lèvre d'étanchéité coulée (40), qui est reliée au premier joint d'étanchéité profilé extrudé (22) dans la zone d'au moins une extrémité d'arc (52) de son étendue en forme d'arc,
la lèvre d'étanchéité coulée (40) étant fabriquée en EPDM et une surface d'étanchéité (44) de la lèvre d'étanchéité coulée (40) et une surface d'étanchéité (48) d'une lèvre de joint d'étanchéité profilé (46) du premier joint d'étanchéité profilé (22) étant pourvues d'un revêtement uniforme (50),
la section d'étanchéité (34) présentant un support de lèvre d'étanchéité (58) qui est orienté essentiellement parallèlement au plan d'étanchéité (29) et s'étend en forme d'arc le long de la forme d'arc (42), le support de lèvre d'étanchéité (48) étant relié à une plaque de fixation (70) de la section de fixation (36) qui s'étend essentiellement parallèlement au plan d'étanchéité (29) et se termine essentiellement en forme de triangle, de telle sorte que des bords latéraux de la plaque de fixation (70) sont orientés essentiellement parallèlement aux axes d'étanchéité (24) et (28) respectivement, **caractérisé en ce que** les bords latéraux de la plaque de fixation (70) aboutissent à un coin de plaque (74) où une section d'intégration (38) est reliée à la plaque de fixation (70).

2. Composite de joint d'étanchéité selon la revendication 1, **caractérisé en ce que** la lèvre d'étanchéité coulée (40) est configurée d'une seule pièce.

3. Composite de joint d'étanchéité selon la revendication 1 ou 2, **caractérisé en ce que** la lèvre d'étanchéité coulée (40) s'étend en forme de col par rapport au support de lèvre d'étanchéité (58) de la section d'étanchéité (34).

4. Composite de joint d'étanchéité selon l'une quelconque des revendications 1 à 3, **caractérisé en ce que** la lèvre d'étanchéité coulée (40) présente, à au moins une première extrémité d'arc (52) de son étendue en forme d'arc, un profil d'étanchéité (56) qui définit un axe longitudinal de profil (24), la première extrémité d'arc (52) s'étendant à angle droit par rapport à l'axe longitudinal de profil (24).

5. Composite de joint d'étanchéité selon la revendication 1, une section d'étanchéité de cadre de porte (76) étant formée sur un côté arrière de la section d'intégration (38), une porte avant étant étanchéifiée contre une section de cadre de porte de la carrosserie de véhicule au moyen de la section d'étanchéité de cadre de porte.

6. Procédé de fabrication d'un composite de joint d'étanchéité (20) pour étanchéifier une fenêtre (18) contre un composant de carrosserie (16) d'un véhicule automobile (10), le composite de joint d'étanchéité (20) définissant un plan d'étanchéité (29) ainsi qu'un premier axe d'étanchéité (24) et un deuxième axe d'étanchéité (28) s'étendant transversalement à celui-ci, comprenant les étapes suivantes :
- la coulée d'un dispositif d'étanchéité d'un composite de joint d'étanchéité selon l'une quelconque des revendications 1 à 5, le dispositif d'étanchéité (30) étant fabriqué en EPDM et présentant une section de fixation (36) pour la fixation au composant de carrosserie (16) et une section d'étanchéité (34) avec une lèvre d'étanchéité (40) pouvant être déviée élastiquement transversalement au plan d'étanchéité (29), qui s'étend en forme d'arc du premier axe d'étanchéité (24) vers le deuxième axe d'étanchéité (28),
- l'extrusion d'un premier joint d'étanchéité profilé (22) du dispositif d'étanchéité, qui présente une lèvre de joint d'étanchéité profilé (46), et
- la liaison du dispositif d'étanchéité (30) et du joint d'étanchéité profilé (46) de telle sorte que la lèvre d'étanchéité (40) et la lèvre de joint d'étanchéité profilé (46) se raccordent au niveau d'un espace de liaison ; et
- le revêtement de la lèvre d'étanchéité (40) au-dessus de l'espace de liaison.
